# FASCICULE DE BREVET EUROPEEN

(11) **EP 3 567 409 B1**
(45) Date de publication et mention de la délivrance du brevet: **21.02.2024**
(21) Numéro de dépôt: 19172301.4
(22) Date de dépôt: 02.05.2019
(51) Int. Cl.: G02B 6/42

(54) **SOUS ENSEMBLE OPTIQUE POUR MODULE DE COMMUNICATION SUR FIBRE OPTIQUE, A DISPOSITIF DE COUPLAGE OPTIQUE ALIGNE DE MANIERE PASSIVE**
OPTISCHE UNTEREINHEIT FÜR FASEROPTISCHES KOMMUNIKATIONSMODUL MIT EINER PASSIV AUSGERICHTETEN OPTISCHEN KOPPLUNGSVORRICHTUNG
OPTICAL SUB-ASSEMBLY FOR COMMUNICATION MODULE ON OPTICAL FIBRE, WITH PASSIVE ALIGNED OPTICAL COUPLING DEVICE

(30) Priorité: 09.05.2018 FR 1853949
(43) Date de publication de la demande: 13.11.2019
(73) Titulaire: Radiall, 93300 Aubervilliers (FR)
(72) Inventeur: SCHWERZIG, Rémy, 73240 ROCHEFORT (FR); QUENTEL, François, 38150 VILLE SOUS ANJOU (FR); CLAUDEPIERRE, Christian, 69800 SAINT PRIEST (FR)
(74) Mandataire: Cabinet Nony

(56) Documents cités:
- US-A- 5 065 011
- US-A- 5 687 270
- US-A1- 2004 252 736
- US-A1- 2007 147 744
- US-A1- 2007 286 553
- US-B1- 6 659 659

## Description

### Domaine de l'invention

La présente invention concerne un sous ensemble optique pour conversion optoélectronique, destiné généralement à être brasé sur une carte électronique aussi appelée circuit imprimé d'acronyme anglais PCB pour *« Printed Circuit Board"* et dite carte électronique support, et destiné à convertir des signaux électriques en des signaux optiques ou vice-versa.

On désigne par sous ensemble optique ou OSA (« Optical Sub Assembly ») un sous ensemble regroupant un(des) composant(s) optoélectronique(s) et son système de couplage optique vers une ou des fibres optiques.

L'invention concerne aussi bien un sous-ensemble émetteur, destiné à réaliser la conversion d'un signal électrique en un signal optique, qu'un sous-ensemble récepteur destiné à réaliser la conversion d'un signal optique en un signal électrique.

L'invention concerne aussi un module optoélectronique qui intègre un ou plusieurs sous-ensembles, sur une carte électronique dans un boitier.

L'invention concerne aussi un module émetteur-récepteur qui combine un sous-ensemble récepteur et un sous-ensemble émetteur qui partagent des circuits électroniques communs et une carte électronique commune, usuellement désigné en anglais sous la dénomination « Transceiver », contraction de «TRANSmitter» (« émetteur ») et de « reCEIVER » (« récepteur »).

L'invention concerne de façon générale les modules optoélectroniques destinés à être mis en oeuvre notamment dans le domaine aéronautique, le domaine spatial, le domaine de la défense, celui du transport ou du médical ou encore le domaine des télécommunications, le domaine des communications de données et le domaine de l'industriel.

### Etat de l'art

On connaît des systèmes de liaison optique, qui utilisent des modules optoélectroniques et un lien optique réalisé par une ou plusieurs fibres optiques. Chaque module optoélectronique émetteur ou récepteur est constitué d'une carte électronique, d'un composant optoélectronique et de son composant électronique de commande, d'une ou plusieurs fibres optiques qui peuvent être concaténées en rubans et d'un dispositif de couplage optique entre le composant optoélectronique et la ou les fibres optiques.

Chaque module est ensuite fixé, par brasage ou par le biais d'un connecteur électrique sur une carte d'application.

Un système de liaison optique fonctionnel ou lien optique comprend ainsi au moins un module émetteur et au moins un récepteur couplé optiquement au module émetteur via un medium optique fibré.

On peut citer les produits commerciaux dénommés D-Lightsys^{®} commercialisés par le déposant RADIALL qui peuvent concerner aussi bien un module émetteur qu'un module récepteur, ou un système « Transceiver » intégrant les deux fonctions émetteur et récepteur.

Si ces systèmes de liaison optique ont donné et donnent encore entière satisfaction en particulier en termes de performances, notamment pour des signaux à haut débit, ils peuvent encore être améliorés notamment, en termes de procédé d'alignement et de coûts de réalisation et d'assemblage des modules.

En effet, les modules optoélectroniques à fibres optiques connus, tels que ceux présents dans la gamme D-Lightsys^{®}, peuvent nécessiter des alignements optiques actifs du fait, soit de la mise en oeuvre de la connectique nécessaire pour s'interfacer avec la fibre optique, soit de la mise en oeuvre de la fibre optique directement au sein du TOSA ou du ROSA. Ces alignements actifs et très précis génèrent des coûts élevés.

En plus, de la contrainte d'alignement passif, il existe d'autres besoins à prendre en compte :
- assurer une conversion électro-optique (émetteur) et optoélectronique (récepteur) de signaux numériques ou analogiques dans une bande de 0 à plusieurs dizaines de gigabits par seconde (Gbps) ou Gigahertz,
- permettre de faire transiter le signal optique d'une carte électronique à un équipement électronique ou à une autre carte électronique,
- définir une liaison robuste, c'est-à-dire compatible avec des environnements fortement contraints, tels que l'aérospatial, l'aéronautique, le médical, les télécoms et celui de la défense, et notamment être capables de fonctionner à des températures de -40°C à +85°C, et/ou de résister à des chocs et vibrations selon les normes aéronautiques en vigueur, et/ou des taux d'humidité importants,
- avoir une très faible consommation électrique, typiquement inférieure à 150 mW.

En particulier, les besoins liés à certaines applications embarquées ou non, impliquent que l'encombrement maximal qu'un module optoélectronique, que ce soit l'émetteur ou le récepteur, peut occuper sur chaque carte d'application soit très réduit.

Par ailleurs, il peut également y avoir un intérêt à trouver des solutions d'interface de couplage avec des fibres optiques qui soient faciles à assembler et aisément démontables sans outil.

Les brevets US6302596 et US8244085 divulguent chacun une solution d'assemblage de sous ensemble optoélectronique de type TOSA ou ROSA avec un boitier dans lequel est monté une lentille optique alignée au-dessus du composant optoélectronique, puces ou laser VSCEL ou DFB, supporté et relié électriquement à une carte électronique.

Si ces solutions sont robustes, elles nécessitent impérativement une méthode d'alignement entre les composants qui soit active ou l'utilisation d'une lentille, ce qui impacte le coût d'assemblage. De plus, la lentille peut être sensible à l'humidité, et donc cela peut potentiellement affecter les performances du module. D'autre part, l'utilisation d'un principe basé sur une lentille nécessite la présence d'une cavité d'air, ce qui peut être rédhibitoire pour certaines contraintes d'herméticité et d'applications comme les applications spatiales.

La demande de brevet US2007/0147744A1 divulgue un sous-ensemble optique pour module optoélectronique selon le préambule de la revendication 1.

La demande de brevet US2004/0252736A1 concerne un module optique comprenant un substrat avec broches de connexion sur lequel est positionnée une diode laser à cavité verticale émettant par la surface (VCSEL).

Le brevet US5687270 décrit dans son mode de la figure 1, un couplage entre un photodétecteur et une férule fibrée avec une fibre optique à l'extrémité libre.

Il existe donc un besoin particulier pour améliorer les sous-ensembles optiques des modules, en vue de diminuer les coûts d'assemblages liés aux alignements actifs et de s'affranchir des risques de dégradation des performances liés à l'humidité.

Le but de l'invention est de répondre au moins en partie à ce(s) besoin(s).

### Exposé de l'invention

Pour ce faire, l'invention a pour objet, un sous-ensemble optique pour module optoélectronique selon la revendication 1. Les modes de réalisation avantageux sont définis dans les revendications dépendantes.

Par « composant optoélectronique », on entend ici et dans le cadre de l'invention, des composants nus ou puces, c'est-à-dire qui ne sont pas enveloppés d'un emballage ou autrement dit encapsulés dans un enrobage isolant électrique, aussi appelé couramment « packaging » en anglais.

Par « composants électroniques de commande », on entend ici des composants de pilotages qui peuvent également être sous la forme de composants nus. Mais ils peuvent aussi être encapsulés et déportés dans le module.

La carte électronique support peut être un circuit flexible et être pliée à angle droit. Elle peut aussi être rigide et en deux parties collées à angle droit. Mais selon les applications, cette carte peut être sans angle et sur un seul plan.

On précise que dans le cadre de l'invention, la carte électronique support du module optoélectronique est un circuit imprimé ou un empilement de feuilles de matériaux diélectriques, dans lequel un circuit électrique est réalisé.

La carte électronique du module est nécessairement indépendante de la carte électronique d'application ou d'utilisation finale sur laquelle le module selon l'invention est destiné à être fixé. La fixation d'un module optoélectronique selon l'invention sur une carte d'application peut être réalisée par les interconnexions électriques de cette dernière.

Le sous-ensemble optique selon l'invention peut constituer un sous-ensemble émetteur, le composant électronique de commande étant un circuit de commande de composants optoélectroniques émettant par la surface. Il peut s'agir d'un circuit de commande d'une diode laser à cavité verticale émettant par la surface, de type VCSEL ou une diode électroluminescente LED ou tout autre composant photoémetteur vertical.

Le sous-ensemble optique selon l'invention peut également constituer un sous-ensemble récepteur, le composant électronique de commande étant un amplificateur à transimpédance, le composant optoélectronique étant une photodiode, notamment une photodiode PIN.

Le module optoélectronique selon l'invention peut constituer un module émetteur qui comprend un ou plusieurs sous-ensembles émetteur. Un module optoélectronique récepteur selon l'invention comprend un ou plusieurs sous-ensembles récepteurs. Un module selon l'invention peut être mixte et combiner les deux fonctions émettrice et réceptrice. Le module optoélectronique peut être monovoie ou multivoies.

Un module optoélectronique multivoies forme un transceiver, comprenant au moins un sous-ensemble émetteur selon l'invention au moins un sous-ensemble récepteur selon l'invention, et une carte électronique commune à laquelle les composants optoélectroniques avec leurs composants électroniques de commande sont reliés électriquement.

Avantageusement, le circuit imprimé du module récepteur et celui du module émetteur sont pliés à angle droit de sorte que les axes optiques desdits modules optoélectroniques soient parallèle au substrat de la carte électronique commune.

Les types de fibres optiques utilisés avec un sous-ensemble selon l'invention peuvent être variés, par exemple fibre optique multimode de coeur 50 µm ou de coeur 62,5 µm. Des fibres de type monomodes peuvent aussi être utilisées selon les applications visées.

Selon l'invention, la bague d'alignement permet d'aligner mécaniquement et de centrer de manière passive directement au montage le sous-ensemble mécanique et donc d'aligner aisément l'axe optique du composant optoélectronique avec l'axe de la férule optique fibrée et donc avec la fibre optique prolongée par une férule complémentaire qui vient se loger en regard dans la cage de maintien.

On n'a donc pas besoin d'un outillage spécifique et spécialisé qui peut être coûteux pour aligner mécaniquement l'axe optique du composant optoélectronique avec l'axe optique d'une fibre optique pendant que les composants sont alimentés.

Ainsi, grâce à l'invention, on obtient un sous-ensemble optique qui est compact, robuste et parfaitement adapté aux environnements contraignants, notamment avec des taux d'humidité élevés, et dont le coût d'assemblage est réduit par le fait qu'il n'est plus nécessaire d'avoir un alignement actif comme dans certains modules et/ou avec lentille optique selon l'état de l'art.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en perspective d'un exemple de réalisation d'un module optoélectronique transceiver intégrant deux sous-ensembles optiques selon l'invention, dont un est sous-ensemble émetteur (TOSA) et l'autre un sous-ensemble récepteur (ROSA) ;
- la figure 2 est une vue en perspective d'un exemple de sous-ensemble optique selon une variante de l'invention,
- la figure 3 est une vue en coupe du sous-ensemble selon la figure 2 dans la version récepteur (ROSA),
- la figure 3A est une vue en coupe du sous ensemble 2 selon la figure 3 comprenant en outre un manchon de maintien et la cage de maintien,
- la figure 4 est une vue de détail de la figure 3 montrant les différents composants, bague et sous-ensemble mécanique du module alignés,
- la figure 5 est une vue de détail en perspective d'un exemple de sous-ensemble optique dans la version émetteur (TOSA) selon une variante de l'invention.

Dans l'ensemble de la demande, les termes « vertical », « inférieur », « supérieur », « bas », « haut », « dessous », « dessus » sont à comprendre par référence par rapport au sens de l'empilement des différents composants d'un sous-ensemble optique selon l'invention.

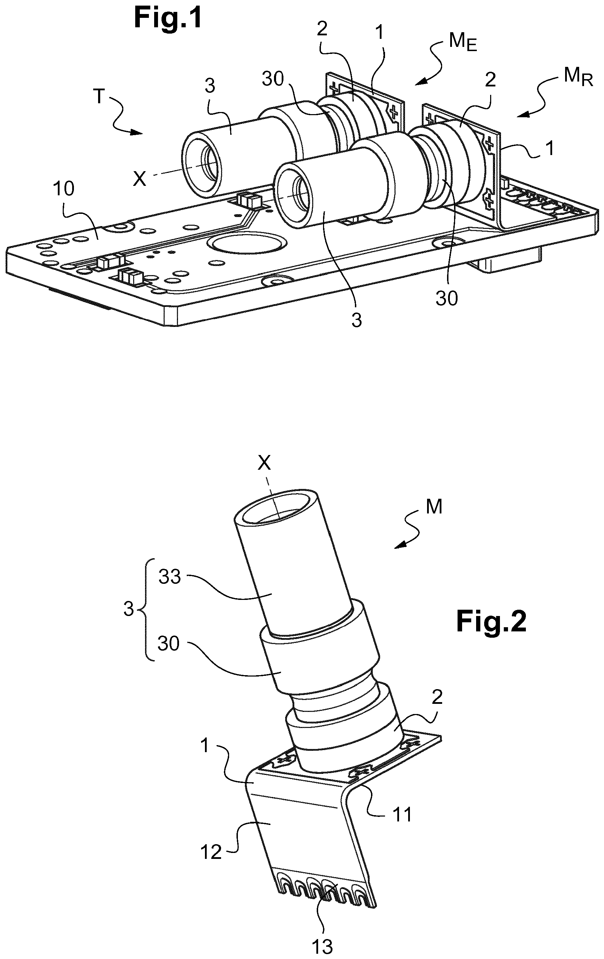

On a représenté en figure 1 un module T transceiver intégrant un sous-ensemble optique émetteur M_{E} (TOSA) selon l'invention et un sous-ensemble optique récepteur M_{R} (ROSA) également selon l'invention.

Le transceiver T comprend une carte électronique 10 sur laquelle sont fixés les deux sous-ensembles M_{E}, M_{R} par l'intermédiaire de leurs cartes électroniques support respectives 1.

La carte 10 va servir d'interface avec une carte électronique d'application ou un équipement électronique.

Plus précisément, chaque sous-ensemble optique M_{E}, M_{R} selon l'invention comprend une carte électronique support 1 qui est pliée, à angle droit dans l'exemple illustré, fixée et reliée électriquement à la carte électronique commune 10.

En lieu et place d'un circuit imprimé 10 (PCB pour « Printed Circuit Board »), on peut aussi avoir une carte électronique dont le substrat est constitué d'un empilement de couches ou feuilles de matériaux diélectriques, tels que l'alumine et au sein duquel un circuit de conducteurs électriques est agencé.

Ainsi, une partie 11 de chaque carte support 1 est en appui plan-plan contre le substrat de la carte électronique commune 10 tandis que l'autre partie 12, qui est coudée, est inclinée, à angle droit dans l'exemple illustré, par rapport au substrat de la carte 10.

A l'extrémité de la partie coudée 12 émergent les pistes conductrices 13 pour réaliser la connexion électrique avec celles de la carte commune 10.

Sur la partie non coudée 11 de chaque carte support 1 est fixée une bague d'alignement 2 sur laquelle est aligné et fixé un sous-ensemble mécanique 3 par l'intermédiaire de son composant formant un raccord 30 comme expliqué par la suite.

Avec cet agencement, l'axe optique X de chaque module optoélectronique M_{E}, M_{R} est parallèle au substrat de la carte commune 10 bien que les composants optoélectroniques sélectionnés émettent ou réceptionnent les signaux optiques par leur surface.

Cet agencement est avantageux car l'ensemble des composants des sous-ensembles s'étend selon l'axe X parallèle au substrat de la carte commune et donc l'encombrement en hauteur est fortement réduit. Pour d'autres applications, cette contrainte peut ne pas être nécessaire et la carte support peut ne présenter aucun angle.

La figure 2 montre un sous-ensemble M selon l'invention avant sa fixation et liaison électrique sur une carte électronique, telle que la carte 10 de la figure 1.

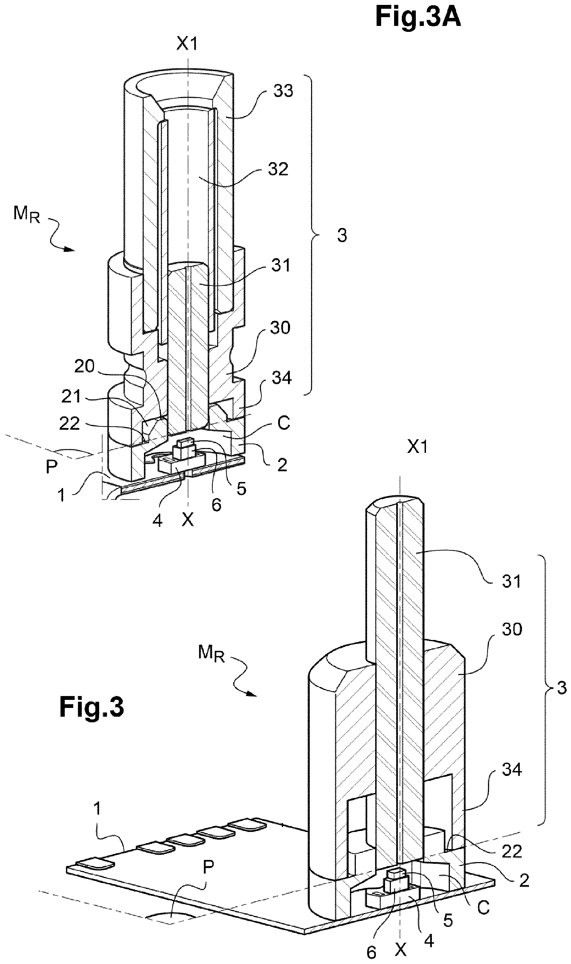

La figure 3 montre tous les composants d'un sous-ensemble récepteur M_{R} (ROSA) tel qu'il est assemblé.

Tout d'abord, les différents éléments électroniques actifs du sous-ensemble M sont empilés les uns sur les autres et fixés entre eux, de préférence par collage au moyen d'une colle époxy par exemple ou par brasage.

Ainsi, de bas en haut de l'empilement, le sous-ensemble M_{R} comprend :
- le circuit imprimé 1 ;
- un composant électronique de commande 4 fixé directement sur le circuit imprimé 1 et relié électriquement au circuit électronique par fils soudés 40 selon une technique de « wire-bonding » ou pontage;
- un composant optoélectronique 5 adapté pour recevoir un signal lumineux par sa surface supérieure selon un axe optique X, le composant optoélectronique étant relié électriquement au composant électronique 4 par une technique de micro-câblage filaire, par exemple au moyen des fils soudés 50, ou par une technique d'assemblage « flip-chip » ou autres techniques d'interconnexion électronique de la micro-électronique classique ;
- le cas échéant, une cale 6 en matériau isolant électrique, telle qu'une céramique, intercalé entre les deux composants 4, 5.

Les composants 4 et 5 sont des composants nus, c'est-à-dire non encapsulés.

Dans l'empilement illustré, la cale 6 est fixée directement sur le dessus du composant électronique de commande 4 et le composant optoélectronique 5 est fixé sur le dessus de la cale 6. Ces fixations peuvent être effectuées par collage au moyen d'une colle en résine époxy par exemple ou par brasage.

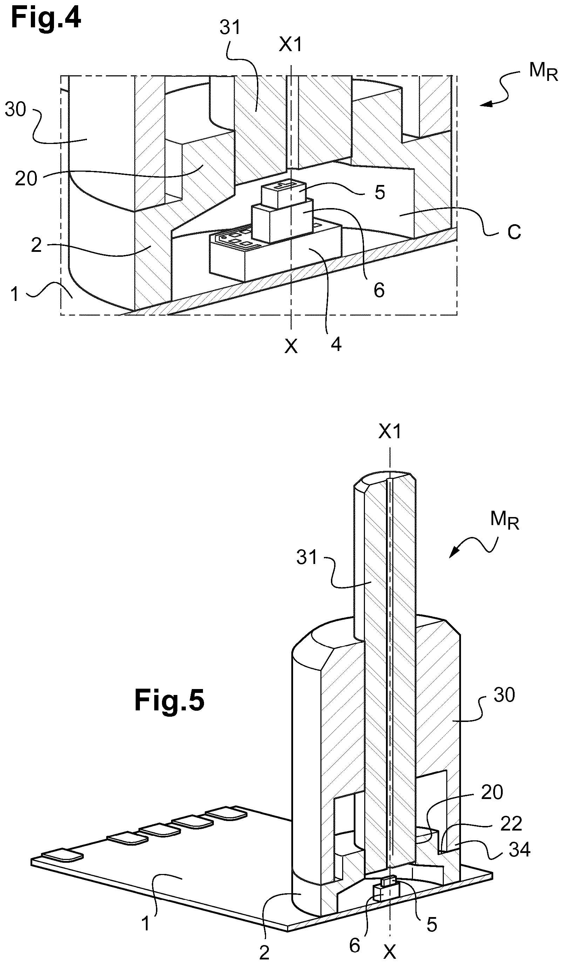

Tel qu'illustré en figures 3 et 4, lorsque le sous-ensemble optique selon l'invention est un sous-ensemble récepteur, alors le composant optoélectronique 5 est une photodiode de type PIN et le composant électronique de commande 4 est un amplificateur à transimpédance pour photodiode.

Tel qu'illustré en figure 3A, le sous-ensemble mécanique 3 comprend en sus du raccord 30 aligné avec centrage et fixé sur la bague 2 :
- une férule optique fibrée 31 qui s'étend autour de son axe central X1,
- un manchon de maintien 32 qui maintient avec centrage en son sein la férule optique, le manchon étant destiné à loger une férule optique complémentaire pour transmission du signal lumineux,
- une cage de maintien 33 qui maintient avec centrage en son sein le manchon de maintien 32.

Selon les applications et/ou la forme supérieure du manchon, le manchon de maintien et la cage de maintien peuvent être optionnels.

Le raccord 30 maintient avec centrage à la fois la cage 33 et la férule optique 31.

Selon l'invention, le raccord 30 est aligné mécaniquement par la bague d'alignement 2 en étant fixé sur cette dernière, de préférence par collage.

Avec cet alignement mécanique, la férule 31 est emmanchée dans l'ouverture centrale débouchante 20 de la bague annulaire 2 avec l'axe central X1 de la férule 31 qui confondu avec l'axe optique X.

La bague 2 définit avec la férule 31 une cavité d'encapsulation C, fermée à l'intérieur de laquelle les composants électroniques 4, 5 et la cale 6 sont encapsulés.

Pour optimiser le couplage optique entre férule31 et composant optoélectronique 5, la cavité d'encapsulation C peut être avantageusement remplie partiellement ou totalement d'une résine transparente. La résine pourrait être du type EPO-TEK-301-2FL par exemple.

En outre, la cavité C ainsi remplie rend moins sensibles à l'humidité les composants 4, 5.

En outre, le raccord 30 présente une surface périphérique 34 qui est en appui plan-plan P contre la surface périphérique 22 de la bague d'alignement 2.

Selon l'invention revendiquée, la férule optique 31 est maintenue dans le raccord 30 de telle sorte que sa face d'extrémité libre soit dans le plan de la surface périphérique 34 du raccord et par là dans le plan d'appui P entre bague 2 et raccord 30. Cela permet de connaître avec précision la position axiale de la férule 31 par rapport au substrat de la carte électronique 1 et donc à définir très précisément, le cas échéant en calibrant la cale 6, la distance axiale entre composant optoélectronique 5 et face d'extrémité libre de la férule optique 31 pour perfectionner l'alignement optique du sous-ensemble.

Tel qu'illustré en figure 2, lorsque le sous-ensemble optique selon l'invention est un sous-ensemble émetteur M_{E}, le composant optoélectronique 5 est un laser à cavité verticale émettant par la surface (VCSEL pour « Vertical-Cavity Surface-Emitting Laser) ou tout autre composant optoélectronique émettant par la surface.

Grâce à l'invention, on obtient un module multivoie transceiver T qui peut comporter à la fois au moins un sous-ensemble émetteur par diode laser et au moins un sous-ensemble transmetteur par photodiode, qui est compact, robuste et adapté aux environnements sévères, notamment avec taux d'humidité élevé et dont le coût d'assemblage est limité du fait de l'absence de nécessité d'un alignement actif comme dans un module avec lentille optique selon l'état de l'art.

D'autres variantes et améliorations peuvent être prévues sans pour autant sortir du cadre de l'invention.

L'expression « comportant un » doit être comprise comme étant synonyme de « comportant au moins un », sauf si le contraire est spécifié.

## Revendications

1. Sous-ensemble optique pour module optoélectronique (M), destiné à assurer une conversion d'un signal électrique depuis une carte électronique d'application en un signal optique ou vice-versa, comprenant :
- une carte électronique (1) de support, destinée à servir d'interface avec une autre carte électronique ;
- un composant optoélectronique (5) adapté pour émettre ou recevoir un signal lumineux par sa surface supérieure selon un axe optique (X), le composant optoélectronique, étant fixé sur le dessus la carte électronique de support et relié électriquement au circuit de la carte électronique de support directement ou par un composant électronique de commande (4) ;
- une bague annulaire d'alignement (2), agencée autour du composant optoélectronique en étant fixée à la carte électronique de support, la bague annulaire d'alignement comprenant une ouverture centrale (20) débouchant en regard du composant optoélectronique ;
- un sous-ensemble mécanique (3) comprenant :
• une férule optique fibrée fixe (31) s'étendant autour de son axe central (X1);
• un raccord de maintien et d'alignement (30) adapté pour maintenir avec centrage la férule optique fibrée fixe du sous-ensemble,
sous-ensemble dans lequel :
le raccord de maintien et d'alignement (30) est aligné et centré mécaniquement par la bague annulaire d'alignement (2) en étant fixé sur cette dernière, tel que la férule optique fibrée fixe est emmanchée dans l'ouverture centrale (20) de la bague annulaire d'alignement (2) avec l'axe central (X1) de la férule optique fibrée fixe confondu avec l'axe optique (X), **caractérisé en ce que** la distance de l'extrémité de la férule optique fibrée fixe (31) à la surface du composant optoélectronique est fixée par une butée du raccord de maintien et d'alignement (30) contre la bague annulaire d'alignement (2), la butée du raccord de maintien et d'alignement définissant également la distance de l'extrémité de la férule optique fibrée fixe par rapport au raccord de maintien et d'alignement,
le raccord de maintien et d'alignement présentant une surface périphérique (34) en appui plan-plan contre une surface périphérique (22) de la bague annulaire d'alignement, et
la férule optique fibrée fixe étant maintenue dans le raccord de maintien et d'alignement de telle sorte que sa face d'extrémité libre soit dans le plan (P) de la surface périphérique du raccord de maintien et d'alignement et par là dans le plan d'appui entre bague annulaire d'alignement et raccord de maintien et d'alignement.

2. Sous-ensemble optique selon la revendication 1,dans lequel le sous-ensemble mécanique comprend en outre un manchon de maintien (32) adapté pour maintenir avec centrage en son sein la férule optique fibrée fixe, le manchon de maintien étant destiné à loger une férule optique complémentaire et une cage de maintien (33), adaptée pour maintenir avec centrage en son sein le manchon de maintien.

3. Sous-ensemble optique selon l'une des revendications précédentes, constituant un sous-ensemble émetteur (M_{E}), le composant optoélectronique étant un laser émettant par la surface.

4. Sous-ensemble optique selon l'une des revendications 1 ou 2, constituant un sous-ensemble récepteur (M_{R}), le composant optoélectronique étant une photodiode, notamment une photodiode PIN.

5. Sous-ensemble optique selon l'une des revendications précédentes, dans lequel le composant optoélectronique et, si le sous-ensemble comporte un composant électronique de commande, le composant électronique de commande sont encapsulés à l'intérieur d'une cavité d'encapsulation (C), fermée, délimitée par la bague annulaire d'alignement et la férule optique fibrée fixe,

6. Sous-ensemble optique selon la revendication 5, la cavité d'encapsulation étant remplie partiellement ou totalement d'une résine transparente (R), adaptée pour optimiser le couplage optique entre la férule optique fibrée fixe et le composant optoélectronique.

7. Sous-ensemble optique selon l'une des revendications précédentes, le composant optoélectronique ou le composant électronique de commande étant collé ou brasé ou fixé selon une technique dite « puce retournée », ou « flip chip » en anglais, directement sur la surface de la carte électronique de support.

8. Sous-ensemble optique selon l'une des revendications 1 à 6, comprenant une cale (6) collée ou brasée ou fixée selon une technique dite « puce retournée », ou « flip chip » en anglais, directement sur la surface de la carte électronique de support ou directement sur le composant électronique de commande lui-même collé ou brasé ou fixé selon une technique de puce retournée sur la cale, la cale étant intercalée entre la surface de la carte électronique de support et le composant optoélectronique ou entre le composant électronique de commande et le composant optoélectronique.

9. Sous ensemble optique selon l'une des revendications précédentes, la carte électronique de support étant un circuit imprimé plié, de sorte à réaliser un renvoi d'angle des connexions électriques avec une carte électronique d'application.

10. Module optoélectronique, comprenant au moins un sous-ensemble optique selon l'une des revendications précédentes monté sur une carte électronique d'application.

11. Module optoélectronique multivoies formant un transceiver, comprenant au moins un sous-ensemble émetteur selon la revendication 3 seule ou en combinaison avec l'une des revendications 5 à 9 et au moins un sous-ensemble récepteur selon la revendication 4 seule ou en combinaison avec l'une des revendications 5 à 9, et une carte électronique d'application commune à laquelle les composants optoélectroniques avec leurs composants électroniques de commande sont reliés électriquement.

12. Transceiver selon la revendication 11 en combinaison avec la revendication 9, le circuit imprimé plié du sous-ensemble récepteur et celui du sous-ensemble émetteur étant pliés à angle droit de sorte que les axes optiques desdits sous-ensembles récepteur et émetteur soient parallèles à un substrat de la carte électronique d'application commune.

## Patentansprüche

1. Optische Unterbaugruppe für ein optoelektronisches Modul (M), dazu bestimmt, eine Umwandlung eines elektrischen Signals von einer elektronischen Anwendungskarte in ein optisches Signal oder umgekehrt zu gewährleisten, die enthält:
- eine elektronische Trägerkarte (1), die dazu bestimmt ist, als Schnittstelle mit einer anderen elektronischen Karte zu dienen;
- ein optoelektronisches Bauteil (5), das geeignet ist, über seine Oberfläche ein Lichtsignal gemäß einer optischen Achse (X) zu emittieren oder zu empfangen, wobei das optoelektronische Bauteil auf der Oberseite der elektronischen Trägerkarte befestigt und mit der Schaltung der elektronischen Trägerkarte direkt oder über ein elektronisches Steuerbauteil (4) elektrisch verbunden ist;
- einen kreisförmigen Ausrichtungsring (2), der um das optoelektronische Bauteil herum angeordnet ist, indem er an der elektronischen Trägerkarte befestigt ist, wobei der kreisförmige Ausrichtungsring eine zentrale Öffnung (20) enthält, die gegenüber dem optoelektronischen Bauteil mündet;
- eine mechanische Unterbaugruppe (3), die enthält:
• eine ortsfeste optische Faserhülse (31), die sich um ihre zentrale Achse (X1) herum erstreckt;
• ein Halte- und Ausrichtungsverbindungsstück (30), das geeignet ist, die ortsfeste optische Faserhülse der Unterbaugruppe mit Zentrierung zu halten,
Unterbaugruppe, in der:
das Halte- und Ausrichtungsverbindungsstück (30) durch den kreisförmigen Ausrichtungsring (2) ausgerichtet und mechanisch zentriert wird, indem es an diesem befestigt ist, derart, dass die ortsfeste optische Faserhülse in die zentrale Öffnung (20) des kreisförmigen Ausrichtungsrings (2) eingeschoben ist, wobei die zentrale Achse (X1) der ortsfesten optischen Faserhülse mit der optischen Achse (X) zusammenfällt,
**dadurch gekennzeichnet, dass** der Abstand des Endes der ortsfesten optischen Faserhülse (31) zur Fläche des optoelektronischen Bauteils durch einen Anschlag des Halte- und Ausrichtungsverbindungsstücks (30) gegen den kreisförmigen Ausrichtungsring (2) festgelegt wird, wobei der Anschlag des Halte- und Ausrichtungsverbindungsstücks ebenfalls den Abstand des Endes der ortsfesten optischen Faserhülse bezüglich des Halte- und Ausrichtungsverbindungsstücks definiert,
wobei das Halte- und Ausrichtungsverbindungsstück eine Umfangsfläche (34) in ebener Auflage gegen eine Umfangsfläche (22) des kreisförmigen Ausrichtungsrings aufweist, und
wobei die ortsfeste optische Faserhülse derart in dem Halte- und Ausrichtungsverbindungsstück gehalten wird, dass ihre freie Endseite sich in der Ebene (P) der Umfangsfläche des Halte- und Ausrichtungsverbindungsstücks und somit in der Auflageebene zwischen kreisförmigem Ausrichtungsring und Halte- und Ausrichtungsverbindungsstück befindet.

2. Optische Unterbaugruppe nach Anspruch 1, wobei die mechanische Unterbaugruppe außerdem eine Haltemuffe (32), die geeignet ist, die ortsfeste optische Faserhülse mit Zentrierung in ihrem Inneren zu halten, wobei die Haltemuffe dazu bestimmt ist, eine komplementäre optische Hülse aufzunehmen, und einen Haltekäfig (33) enthält, der geeignet ist, die Haltemuffe mit Zentrierung in seinem Inneren zu halten.

3. Optische Unterbaugruppe nach einem der vorhergehenden Ansprüche, die eine emittierende Unterbaugruppe (M_{E}) bildet, wobei das optoelektronische Bauteil ein durch die Fläche emittierender Laser ist.

4. Optische Unterbaugruppe nach einem der Ansprüche 1 oder 2, die eine empfangende Unterbaugruppe (M_{R}) bildet, wobei das optoelektronische Bauteil eine Photodiode ist, insbesondere eine PIN-Photodiode.

5. Optische Unterbaugruppe nach einem der vorhergehenden Ansprüche, wobei das optoelektronisches Bauteil und, wenn die Unterbaugruppe ein elektronisches Steuerbauteil aufweist, das elektronische Steuerbauteil im Inneren eines geschlossenen Einkapselungshohlraums (C) eingekapselt sind, der vom kreisförmigen Ausrichtungsring und von der ortsfesten optischen Faserhülse begrenzt wird.

6. Optische Unterbaugruppe nach Anspruch 5, wobei der Einkapselungshohlraum teilweise oder vollständig mit einem transparenten Harz (R) gefüllt ist, das geeignet ist, die optische Kopplung zwischen der ortsfesten optischen Faserhülse und dem optoelektronischen Bauteil zu optimieren.

7. Optische Unterbaugruppe nach einem der vorhergehenden Ansprüche, wobei das optoelektronisches Bauteil oder das elektronische Steuerbauteil direkt auf die Fläche der elektronischen Trägerkarte geklebt oder gelötet oder gemäß einer "umgedrehter Chip" oder "flip chip" im Englischen genannten Technik befestigt wird.

8. Optische Unterbaugruppe nach einem der Ansprüche 1 bis 6, die eine Unterlegscheibe (6) enthält, die direkt auf die Fläche der elektronischen Trägerkarte oder direkt auf das elektronische Steuerbauteil geklebt oder gelötet oder gemäß einer "umgedrehter Chip" oder "flip chip" im Englischen genannten Technik befestigt wird, das selbst auf die Unterlegscheibe geklebt oder gelötet oder gemäß einer Technik eines umgedrehten Chips befestigt wird, wobei die Unterlegscheibe zwischen die Fläche der elektronischen Trägerkarte und das optoelektronische Bauteil oder zwischen das elektronische Steuerbauteil und das optoelektronische Bauteil eingeschoben wird.

9. Optische Unterbaugruppe nach einem der vorhergehenden Ansprüche, wobei die elektronische Trägerkarte eine umgebogene Leiterplatte ist, um eine Winkelumlenkung der elektrischen Verbindungen mit einer elektronischen Anwendungskarte herzustellen.

10. Optoelektronisches Modul, das mindestens eine optische Unterbaugruppe nach einem der vorhergehenden Ansprüche auf eine elektronische Anwendungskarte montiert enthält.

11. Optoelektronisches Modul, das einen Transceiver bildet, das mindestens eine emittierende Unterbaugruppe nach Anspruch 3 alleine oder in Kombination mit einem der Ansprüche 5 bis 9 und mindestens eine empfangende Unterbaugruppe nach Anspruch 4 alleine oder in Kombination mit einem der Ansprüche 5 bis 9 und eine gemeinsame elektronische Anwendungskarte enthält, mit der die optoelektronischen Bauteile mit ihren elektronischen Steuerbauteilen elektrisch verbunden sind.

12. Transceiver nach Anspruch 11 in Kombination mit Anspruch 9, wobei die umgebogene Leiterplatte der empfangenden Unterbaugruppe und diejenige der emittierenden Unterbaugruppe im rechten Winkel umgebogen sind, so dass die optischen Achsen der empfangenden und emittierenden Unterbaugruppen parallel zu einem Substrat der gemeinsamen elektronischen Anwendungskarte sind.

## Claims

1. An optical sub-assembly for an optoelectronic module (M), designed to provide conversion of an electrical signal from an application electronic board into an optical signal or vice-versa, comprising:
- a carrier electronic board (1), designed to serve as an interface with another electronic board;
- an optoelectronic component (5) designed to emit or to receive a light signal via its upper surface along an optical axis (X), the optoelectronic component being fixed onto the top of the carrier electronic board and electrically connected to the circuit of the carrier electronic board directly or via an electronic control component (4);
- an annular alignment ring (2), arranged around the optoelectronic component while being fixed to the carrier electronic board, the annular alignment ring comprising a central opening coming out opposite the optoelectronic component;
- a mechanical sub-assembly (3) comprising:
• a fixed fiber optic ferrule (31) running around its central axis (X1);
• a holding and alignment connection (30) designed to both hold and center the fixed fiber optic ferrule of the sub-assembly,
sub-assembly wherein:
the holding and alignment connection (30) is mechanically aligned and centered by the annular alignment ring (2) while being fixed onto the latter, such that the fixed fiber optic ferrule is pushed into the central opening (20) of the annular alignment ring with the central axis (X1) of the fixed fiber optic ferrule coincident with the optical axis (X), **characterized in that** the distance from the end of the fixed fiber optic ferrule (31) to the surface of the optoelectronic component is fixed by an end stop of the holding and alignment connection (30) against the annular alignment ring (2), the end stop of the holding and alignment connection also defining the distance from the end of the fixed fiber optic ferrule with respect to the holding and alignment connection,
wherein the holding and alignment connection has a peripheral surface (34) in plane-to-plane contact against a peripheral surface (22) of the annular alignment ring, and
wherein the fixed fiber optic ferrule is held in the holding and alignment connection in such a manner that the face of its free end is in the plane (P) of the peripheral surface of the holding and alignment connection and hence in the contact plane between annular alignment ring and holding and alignment connection.

2. The optical sub-assembly as claimed in claim 1, wherein the mechanical sub-assembly furthermore comprises a fixing collar (32) designed to both hold and center the fixed fiber optic ferrule within it, the fixing collar being designed to accommodate a complementary optical ferrule and a holding cage (33) designed to both hold and center the fixing collar within it.

3. The optical sub-assembly as claimed in one of the preceding claims, forming a transmitter sub-assembly (M_{E}), the optoelectronic component being a surface emitting laser.

4. The optical sub-assembly as claimed in claim 1 or 2, forming a receiver sub-assembly (M_{R}), the optoelectronic component being a photodiode, notably a PIN photodiode.

5. The optical sub-assembly as claimed in in one of the preceding claims, wherein the optoelectronic component and, if the sub-assembly comprises an electronic control component, the electronic control component are encapsulated inside a closed encapsulation cavity (C) bounded by the annular alignment ring and the fixed fiber optic ferrule.

6. The optical sub-assembly as claimed in claim 5, wherein the encapsulation cavity is partially or completely filled with a transparent resin (R) designed to optimize the optical coupling between the fixed fiber optic ferrule and the optoelectronic component.

7. The optical sub-assembly as claimed in in one of the preceding claims, wherein the optoelectronic component or the electronic control component is bonded or brazed or fixed according to a technique referred to as "flip chip" directly onto the surface of the carrier electronic board.

8. The optical sub-assembly as claimed in one of claims 1 to 6, comprising a shim (6) bonded or brazed or fixed according to a technique referred to as "flip chip" directly onto the surface of the carrier electronic board or directly onto the electronic control component, itself bonded or brazed or fixed according to a flip-chip technique onto the shim, the shim being inserted between the surface of the carrier electronic board and the optoelectronic component or between the electronic control component and the optoelectronic component.

9. The optical sub-assembly as claimed in one of the preceding claims, wherein the carrier electronic board is a folded printed circuit, so as to form an angled part for the electrical connections with an application electronic board.

10. An optoelectronic module, comprising at least one optical sub-assembly as claimed in one of the preceding claims mounted onto an application electronic board.

11. A multi-channel optoelectronic module forming a transceiver, comprising at least one transmitter sub-assembly as claimed in claim 3 taken alone or in combination with one of claims 5 to 9 and at least one receiver sub-assembly as claimed in claim 4 taken alone or in combination with one of claims 5 to 9, and a common application electronic board to which the optoelectronic components with their control electronic components are electrically connected.

12. The transceiver as claimed in claim 11 in combination with claim 9, wherein the folded printed circuit of the receiver sub-assembly and that of the transmitter sub-assembly are folded at a right angle such that the optical axes of said receiver and transmitter subassemblies are parallel to a substrate of the common application electronic board.
